# EUROPEAN PATENT APPLICATION

(11) **EP 2 787 695 A1**
(43) Date of publication of application: **08.10.2014**
(21) Application number: 12862462.4
(22) Date of filing: 21.12.2012
(51) Int. Cl.: H04L 12/70, H04L 12/46

(54) **SUBSCRIBER BANDWIDTH NOTIFICATION METHOD**

(30) Priority: 31.12.2011 CN 201110459641
(71) Applicant: Huawei Technologies Co., Ltd, Shenzhen, Guangdong 518129 (CN)
(72) Inventor: KE, Shanyang, Shenzhen Guangdong 518129 (CN)
(74) Representative: Pfenning, Meinig & Partner GbR
(86) International application number: PCT/CN2012/087151
(87) International publication number: WO 2013/097652

(57) **Abstract**

A user bandwidth notification method is disclosed, where the method includes: detecting, by a network side, available bandwidth of a user and a bandwidth requirement of a service currently used by the user; comparing, by the network side, the available bandwidth of the user and the bandwidth requirement of the service currently used by the user; and notifying, by the network side, the user of a bandwidth condition according to a comparison result. By using the present invention, the user can explicitly know that current poor service experience is caused by a mismatch between a user bandwidth condition and a current service bandwidth requirement and may further take an appropriate measure for handling and solving the problem.

## Description

### TECHNICAL FIELD

The present invention relates to the communications field, and in particular, to a user bandwidth notification method.

### BACKGROUND

Various communications networks have become an indispensable part of people's life. A network carrier customizes different types of network package products for users according to needs of different users. However, with richness and development of different types of network applications, a bandwidth requirement of a service is getting higher and higher and requirements of different services for network bandwidth are unbalanced. For example, compared with a text chatting network application, a video service, especially a high definition video service, imposes a much higher requirement on the network bandwidth.

The prior art basically uses a terminal to detect a network speed of a user. When the network speed of the user is insufficient, the user is reminded to buffer and wait to solve the problem. For example, a ppstream software prompts the user "The current network speed is slow, please buffer and wait" when the user bandwidth is relatively small.

Some carriers uses PCC (Policy and charging control, PCC policy and charging control) to improve user experience. The core of the solution is that users determine current network bandwidth experience by themselves. When the experience is poor, the users automatically subscribe to bandwidth from the carrier and a PCEF (Policy and Charging Enforcement Function, policy and charging enforcement function) entity on a network side performs bandwidth adjustment according to a user subscription, thereby improving the user experience.

The solution may be only a self-behavior of client software, or an action taken by a user according an objective feeling of the user. The network side cannot promptly perceive actual bandwidth usage experience of the user.

### SUMMARY

Embodiments of the present invention provide a user bandwidth notification method used to solve a technical problem that poor user experience is caused because a network side is incapable of promptly perceiving actual bandwidth of a user.

To solve the technical problem, an embodiment of the present invention provides a user bandwidth notification method. The method includes:
detecting, by a network side, available bandwidth of a user and a bandwidth requirement of a service currently used by the user;
comparing, by the network side, the available bandwidth of the user and the bandwidth requirement of the service currently used by the user; and
notifying, by the network side, the user of a bandwidth condition according to a comparison result.

An embodiment of the present invention further provides a method for detecting quality of experience QoE of a user. The method includes:
detecting, by a network side, available bandwidth of a user and a bandwidth requirement of a service currently used by the user;
comparing, by the network side, the available bandwidth of the user and the bandwidth requirement of the service currently used by the user; and
determining, by the network side, QoE of the user according to a comparison result.

An embodiment of the present invention further provides a gateway, including a bandwidth detecting unit and a policy executing unit, where
the bandwidth detecting unit is configured to detect a service bandwidth requirement of a user and report the service bandwidth requirement to a bandwidth determining network element; and
the policy executing unit is configured to increase user bandwidth when the bandwidth determining network element determines that bandwidth is insufficient according to obtained available bandwidth of the user and the service bandwidth requirement reported by the bandwidth detecting unit.

An embodiment of the present invention further provides a billing apparatus, including a service bandwidth requirement acquiring unit, an available user bandwidth acquiring unit, a determining unit, and a notifying unit, where
the service bandwidth requirement acquiring unit is configured to receive a service bandwidth requirement sent by a gateway;
the available user bandwidth acquiring unit is configured to acquire available bandwidth of a user;
the determining unit is configured to compare the available bandwidth of the user with the service bandwidth requirement to determine whether the available bandwidth of the user is sufficient; and
the notifying unit is configured to notify the user of an available bandwidth condition according to a determining result of the determining unit.

An embodiment of the present invention further provides a client, including a notification information receiving unit and a bandwidth adjustment triggering unit, where
the notification information receiving unit is configured to receive bandwidth condition notification information delivered after a network side compares available bandwidth of a user with a bandwidth requirement of a service currently used by the user, where the bandwidth condition notification information includes a triggering manner for the user to trigger a bandwidth upgrade, a bandwidth subscription, or a bandwidth trial; and
the bandwidth adjustment triggering unit is configured to send a bandwidth adjustment request to the network side according to the bandwidth adjustment triggering manner carried in the bandwidth condition notification information, and trigger, by using the bandwidth adjustment request, the network side to adjust a bandwidth product of the user, where the adjustment includes at least one of a bandwidth upgrade and a bandwidth product subscription or trial.

By using the technical solutions provided by the embodiments of the present invention, it is implemented that a bandwidth satisfaction condition of a current service of a user is monitored on a network side and is notified to the user and therefore the network side is capable of promptly perceiving bandwidth experience of the user when the user is actually using the service.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of a bandwidth notification method according to an embodiment of the present invention;
FIG. 2 is a flowchart of a method for detecting QoE according to an embodiment of the present invention;
FIG. 3 is a flowchart of a user bandwidth adjustment method according to an embodiment of the present invention;
FIG. 4 is an architecture diagram of a system for implementing user bandwidth adjustment according to an embodiment of the present invention;
FIG. 5 is a flowchart of signaling for implementing user bandwidth adjustment according to an embodiment of the present invention;
FIG. 6 is a schematic diagram of a gateway according to an embodiment of the present invention;
FIG. 7 is a schematic diagram of a billing apparatus according to an embodiment of the present invention; and
FIG. 8 is a schematic diagram of a user client according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

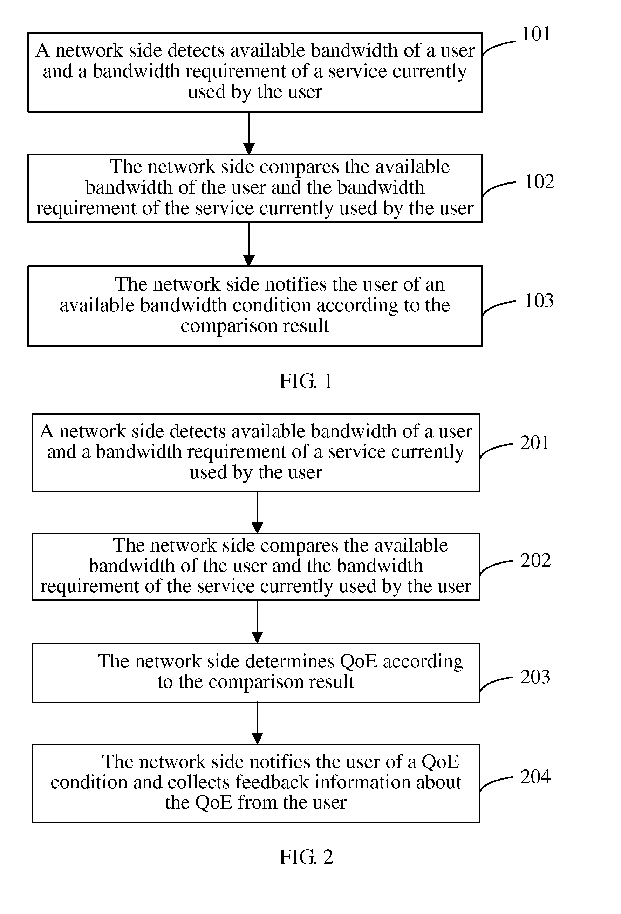

Refer to FIG. 1, which is a flowchart of a bandwidth notification method according to an embodiment of the present invention. The method includes the following steps:
Step 101: A network side detects available bandwidth of a user and a bandwidth requirement of a service currently used by the user.

A method for the network side to detect the available bandwidth of the user may be a static method or a dynamic method:
For the static method, acquiring maximum bandwidth of a package subscribed to by the user may be included. For example, by using a customer subscription record of a carrier, it is acquired that a monthly package subscribed to by the user is 30 Yuan with a 200 M traffic package and 1 M bandwidth. It may be determined that current maximum possible bandwidth of the user is 1 M. That is, the network side detects that the maximum available bandwidth of the user is 1 M.

The network side may also dynamically detect currently available bandwidth of the user in real time, which may specifically include: by using software deployed on a user client, when the currently available bandwidth of the user needs to be detected, sending a detection command to the user end software to require the user client software to report information about a current bandwidth condition of the user, or reporting, by the user client software, information about the currently available bandwidth, periodically or by using an event trigger mechanism; further, service bandwidth separately occupied by each currently running service, a percentage of bandwidth occupied by each currently running service to the total service bandwidth, or the like may be detected.

The network side also needs to acquire the bandwidth requirement of the service currently used by the user. Generally speaking, the network side acquires a minimum bandwidth requirement of a service source currently used by the user.

A dynamic identification method may be used for identifying a bandwidth requirement of a service source. That is, a data network PCEF entity determines the bandwidth requirement of the service according to media information, such as a bit rate in the SDP (Session Description Protocol, session description protocol), delivered by the service source.

In addition, the network side may also directly read a bandwidth requirement of each service configured in a system. For example, the network side may use a billing system to check registration information about the service currently used by the user, so as to obtain the bandwidth requirement of the service currently used by the user. For example, when a Youku service is released on a BSS (Billing Support System, billing support system), a minimum bandwidth requirement of a video service on the Youku website is identified.

In addition to acquiring of the minimum bandwidth requirement, a maximum bandwidth requirement of the service currently used by the user may also be acquired; in addition, according to media description information delivered by the service source and by reading the bandwidth requirement of each service configured in the system, the bandwidth requirement of the current service actually used may further be determined at the same time and is used to be compared with current network bandwidth of the user; the bandwidth requirement of the current service may also be preferentially determined according to SDP information delivered by the service source or is further acquired by reading configuration information in the system if it fails to be acquired from the SDP information. This is not limited in the embodiment of the present invention.

The user may run two or more services that need to occupy network bandwidth at the same time and therefore the network side may obtain bandwidth requirements of multiple running services that occupy the network bandwidth.

Step 102: The network side compares the available bandwidth of the user with the bandwidth requirement of the service currently used by the user.

According to the acquired available bandwidth of the user and the bandwidth requirement of the service currently used by the user, the network side compares the two. Generally speaking, it is determined whether the currently available bandwidth of the user is sufficient for the service currently used by the current user.

Specifically, the determining, by the network side, whether the bandwidth is sufficient may be comparing the currently available bandwidth of the user with the minimum bandwidth requirement of the service currently used; and when current bandwidth of the user is smaller than the minimum bandwidth requirement of the service source, it is considered that the available bandwidth of the user is insufficient.

Based on different objectives, the network may also compare the currently available bandwidth of the user with the maximum bandwidth requirement of the service currently used (that is a bandwidth requirement that enables a service effect to be fully implemented); alternatively, the network side may also determine bandwidth redundancy, that is, compare the currently available bandwidth of the user with the bandwidth requirement of the service currently used, and if the currently available bandwidth is significantly larger than the bandwidth requirement of the service currently used or is significantly larger than bandwidth requirements of all services used before in a user history (a period of time before detection), it is considered that the available bandwidth of the user is excessively large or the bandwidth is redundant.

On a client, a situation, in which two or more services that occupy the network bandwidth are running at the same time, may exist. The network side may acquire network bandwidth requirements of all services together, summarize the network bandwidth requirements of all services (summing, or obtaining a summary value according to an algorithm), and compare the summarized network bandwidth requirements of all services with the available bandwidth of the user; the network side may also summarize only bandwidth requirements of partial services and compare the summarized bandwidth requirements of partial services with the available bandwidth of the user; Certainly, the network side may also compare only a single service with a highest bandwidth requirement with the available bandwidth of the user. The specific comparison method is not limited in this embodiment of the present invention.

Based on some policies, the carrier or client may fixedly allocate network bandwidth of a certain ratio to a type of service or a service, or restrict a maximum value or a ratio of bandwidth occupied by a or a type of service. Therefore, the available bandwidth of the user used to be compared with the current service bandwidth requirement may be a part of a total bandwidth that is currently available for the user, such as a percentage of the total bandwidth of the user. Therefore, in this embodiment of the present invention, the available bandwidth of the user used to be compared with the bandwidth requirement of the service currently used by the user is not limited to current total bandwidth of the user, but may be specifically the available bandwidth of a current service, a fixed ratio value of total user bandwidth, or bandwidth allocated for the current service.

Step 103: The network side notifies the user of the bandwidth condition according to a comparison result.

According to the comparison result in step 102, the network side notifies the user of the bandwidth condition if it determines that the available bandwidth of the user is insufficient. Certainly, the user may also be notified of an available user bandwidth redundancy or other conditions. The specific notification manner includes but is not limited to: an SMS (short message service), an MMS (multimedia messaging service), an E-mail, real-time reminding of an ODP (On Device Portal, on device portal) client, and the like. This is not limited in this embodiment of the present invention.

By using the method provided in this embodiment of the present invention, it is implemented that a bandwidth satisfaction condition of a current service of a user is monitored on a network side and is notified to the user and therefore the network side is capable of promptly perceiving bandwidth using experience of the user when the user actually uses different services and notifying the user. In many times, a poor experience when the user is using some services is caused by a network bandwidth problem. Therefore, by using the method provided in this embodiment of the present invention, the user can explicitly know that the current poor service experience is caused by a mismatch between a user bandwidth condition (such as a condition of a using package) and a current service bandwidth requirement and therefore may take an appropriate measure for handling and solving the problem.

Further, the network side may carry recommendation information, trial information, or upgrade information about a bandwidth product in notification information when notifying the user of the bandwidth condition, so that the user further knows how to solve a bandwidth insufficiency problem.

In combination with the user bandwidth notification method provided in the above embodiment of the present invention, an embodiment of the present invention further provides a method for detecting QoE (Quality of Experience, quality of experience).

QoE is a concept related to QoS (Quality of service, quality of service). The ITU-T Rec E.800 initially defines the QoS as "comprehensive effect of service performance for determining user satisfaction" that includes relatively wide content at many layers. Currently, the industry understands the QoS as a performance indicator of packet data transmission at a bottom layer in a narrow sense, such as delay, jitter, bandwidth, error code, and the like. Each performance indicator further defines an independent KPI (key performance index, key performance index) for measurement. However, the QoS is not equivalent to the QoE. A situation in which the KPI of the QoS is good but user experience is poor commonly exists on a network because the QoE is measured from a perspective of an end user and is an end-to-end concept.

Mobile broadband rapidly develops, however, there are significant deficiencies in perceiving and improving real quality of experience (QoE) of a mobile broadband user by a mobile carrier. When a network access speed of a user is slow and a good experience fails to be obtained, the carrier needs to technically solve a problem, that is, how to determine the QoE of the user.

Refer to FIG. 2, which is a flowchart of a method for detecting QoE according to an embodiment of the present invention. The method includes the following steps:
Step 201: A network side detects available bandwidth of a user and a bandwidth requirement of a service currently used by the user.
Step 202: The network side compares the available bandwidth of the user with the bandwidth requirement of the service currently used by the user.

The above step 201 and step 202 are similar to the above step 101 and step 102. For details and an implementation manner, reference may be made to related description in the above steps 101-102.

Step 203: The network side determines a QoE value of a user network according to a comparison result.

After the currently available bandwidth of the user and a bandwidth requirement of a service source currently used are compared, it is considered that the QoE of the user may be relatively poor when the currently available bandwidth of the user is smaller than the bandwidth requirement of the service source; otherwise, it is considered that the QoE of the user meets a requirement.

Further, a certain deviation may exist between a pure detection result and actual experience of the user because the QoE is an indicator that closely relates to the actual experience of the user. Therefore, steps of user notification and user feedback may further be introduced during determination of a QoE condition. The steps specifically include:
Step 204: The network side notifies the user of the QoE condition and collects feedback information about the QoE from the user.

The user is notified of the QoE condition and feedback on the QoE condition is collected from the user, so that a closed loop is formed for user QoE detection, thereby implementing an accurate detection of the QoE.

Specifically, the network side may:
notify the user that "network bandwidth is insufficient to support a current service requirement, please click a button to confirm whether it is true" when the QoE is poor, and then collect the feedback on the QoE condition from the user after the user clicks a yes or no button.

When the QoE is relatively good, notification to the user and feedback from the user may not be required, thereby avoiding unnecessary interference with the user.

Similar to the above embodiment, further, when notifying the user of the QoE condition or further requiring the user to confirm the QoE condition, especially when requiring the user to confirm that the QoE is relatively poor, the network side may further include recommendation, trial, or update information about a higher bandwidth product in the notification information, so that the user further understands how to solve a problem, that is, the current QoE is relatively poor, thereby improving user experience.

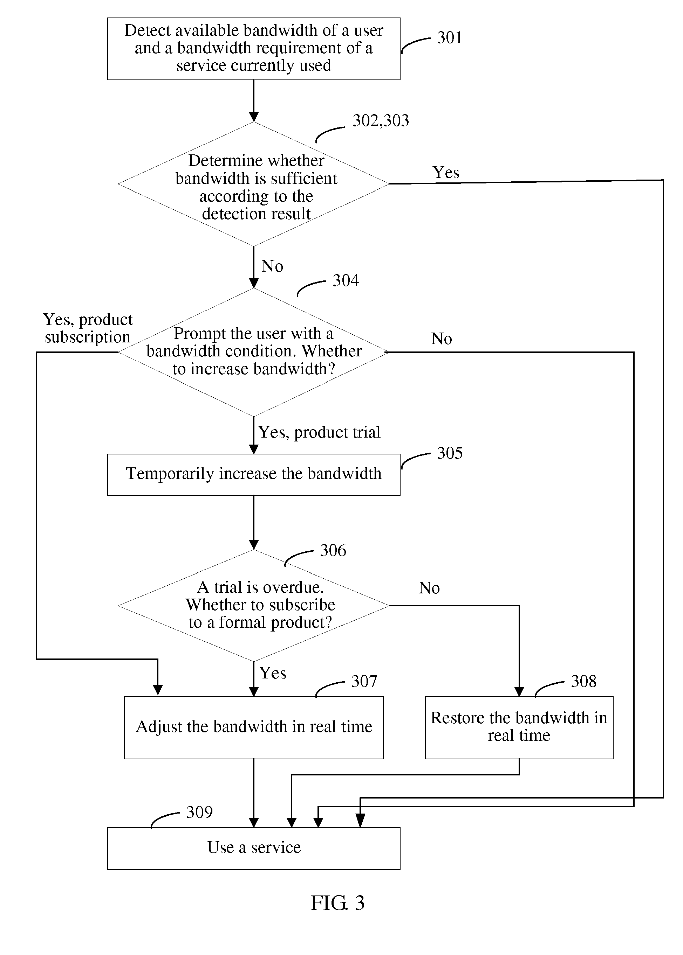

Refer to FIG. 3, which is a flowchart of a user bandwidth adjustment method according to an embodiment of the present invention. The method includes:
Step 301: A network side detects available bandwidth of a user and a bandwidth requirement of a service currently used by the user.
Step 302: The network side compares the available bandwidth of the user with the bandwidth requirement of the service currently used by the user.

The above step 301 and step 302 are similar to the above step 101 and step 102. For details and an implementation manner, reference may be made to related description in the above steps 101-102.

Step 303: The network side determines whether current bandwidth is sufficient according to a comparison result.

Step 304: If bandwidth is determined to be insufficient, notify the user of a bandwidth condition and confirm with the user whether to upgrade the bandwidth. If the user needs to increase the bandwidth, a processing manner, such as a product subscription, a product trial, or the like may be selected; if the user does not need to increase the bandwidth, directly go to a service using step 309.

In this embodiment of the present invention, notification information for notifying the user of the bandwidth condition includes a triggering manner that may enable the user to directly trigger a bandwidth upgrade, a bandwidth subscription, or a bandwidth trial; for example, it may be a bandwidth subscription, that is a product upgrade, or a hyperlink for a trial; after clicking the hyperlink, the user directly goes to a bandwidth subscription, upgrade, or trial page of a carrier, or may even directly perform a bandwidth subscription, upgrade, or trial and does not need to perform an operation by using other channels.

The network side may further select an appropriate recommended package product according user information. For example, according to information such as an area where the user resides, a type of a service frequently accessed, a user age, and a career, an appropriate package product is recommended to the user.

Step 305: The user needs to increase the bandwidth and chooses to perform a product trial. The network side temporarily increases the bandwidth for the user.

Step 306: After a trial period of the user expires, confirm with the user whether to subscribe to a formal product. If the user determines to perform a formal subscription, go to step 307 to perform bandwidth adjustment; if the user determines not to perform the formal subscription, go to step 308 to restore original bandwidth of the user.

Step 307: In conditions that the user directly subscribes to a bandwidth product and the user subscribes to the formal product after the trial period expires, perform bandwidth adjustment for the user to upgrade user bandwidth.

Step 308: If no formal subscription is performed after the trial period of the user expires, restore the original bandwidth of the user.

Step 309: The user continues to use a service after a series of determining and processing flows.

According to the solution in this embodiment of the present invention, in a condition that the user selects the product subscription, adjustment of the user bandwidth is directly implemented by using a PCRF, a PCEF, and a billing system on the network side. The adjustment may be performed in real time or a delayed adjustment is performed according to a certain policy.

When the user selects the product trial, current bandwidth of the user may be temporarily increased and a certain trial period of increased bandwidth is granted to the user. After the trial period expires, the user is notified of whether the user needs to subscribe to a formal upgrade product (bandwidth) and next-step processing is performed according to a user selection. For example, when the user chooses to subscribe to a formal product, the bandwidth adjustment is executed and when the user chooses not to subscribe to a trial product, the previous bandwidth of the user is restored.

In addition, if it is determined that the bandwidth is sufficient for supporting a current service, the network side does not need to perform bandwidth adjustment notification for the user.

By using the method in this embodiment of the present invention, a network side is capable of promptly perceiving bandwidth using experience of a user when the user is actually using various services, and giving a prompt to the user, so that the user may understand a current network bandwidth condition and explicitly understand a comparison relationship between a current network bandwidth product condition and a used service. Further, in this embodiment of the present invention, product recommendation information and/or a triggering manner for the user to trigger a direct upgrade or trial of a product is carried in a notification message, so that the user is capable of performing a trial or an upgrade on a bandwidth product in a more convenient way, thereby improving user experience.

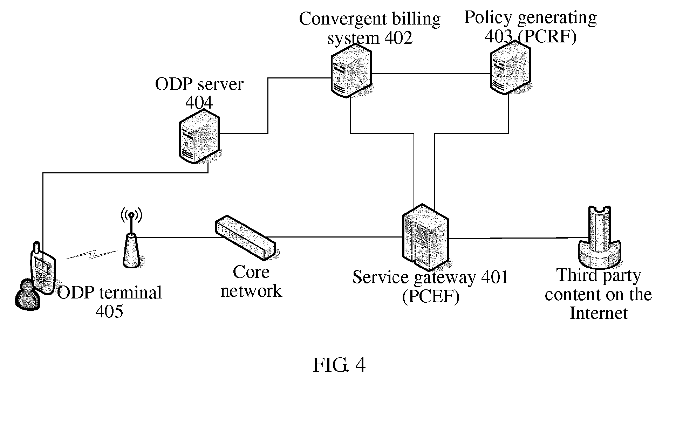

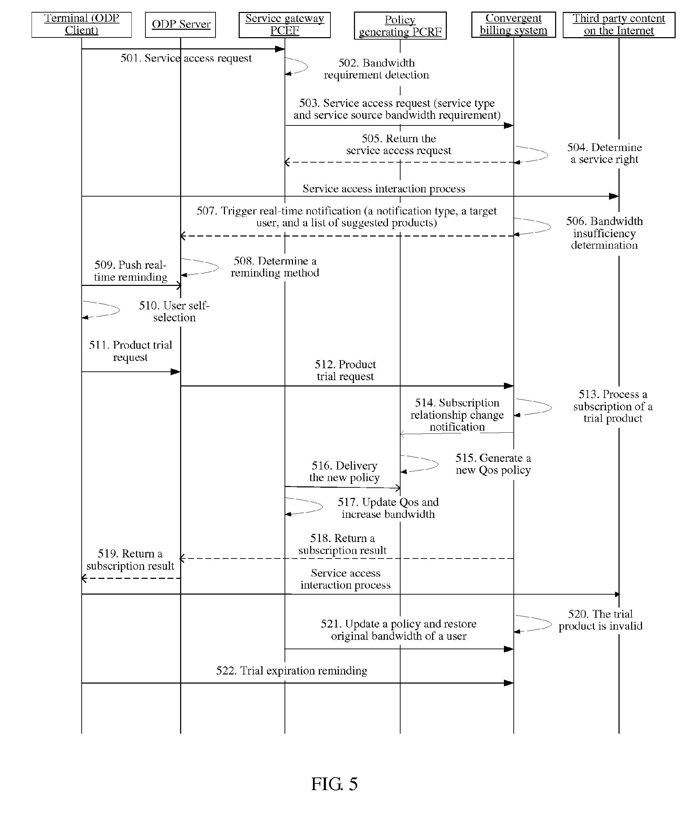

The following combines a specific system architecture diagram of FIG. 4 and a signaling flowchart of FIG. 5 and uses a specific embodiment to describe in detail an implementation process that includes user bandwidth notification, QoE detection, bandwidth adjustment reminding, and a bandwidth product upgrade (including a subscription) or trial. Persons skilled in the art may understand that the various functions listed above may be implemented independently, or may be implemented partially or all together.

As shown in FIG. 4, FIG. 4 is an architecture diagram of a system for implementing bandwidth adjustment according to an embodiment of the present invention.

The system includes a service gateway 401 (with a PCEF function), a convergent billing system 402, a policy generating PCRF network element 403, an ODP server 404, and a terminal 405 with an ODP function. By combining a following signaling flowchart of FIG. 5, the system may provide a capability, such as bandwidth notification, QoE detection, bandwidth adjustment reminding, a bandwidth product upgrade, subscription, or trial, and flexible charging. By using an ODP terminal and an ODP server, the system in this embodiment may support a notification manner, such as a real-time notification manner of page displaying and SMS/MMS. The following describes a basic function of each network element in detail.

Service gateway 401 (with the PCEF function): A service gateway provided in this embodiment of the present invention, which may perform reconstruction based on a function of a conventional data service gateway and is added with capabilities of "bandwidth detection" and "policy execution".

Policy generating (PCRF) server 403: A server with the PCRF function, which is a standard network element under PCC architecture.

Convergent billing system 402: Be implemented based on a conventional billing system and provides functions, such as flexible charging, account management, product management, and notification triggering.

ODP server 404 and ODP client 405: Newly added network elements in this embodiment of the present invention, which provide functions, such as self-service and notification, for an end user.

Refer to FIG. 5, which is a signaling flowchart for implementing user bandwidth adjustment by using the system in FIG. 4 according to an embodiment of the present invention.

Step 501: A user initiates a service access request.

The user initiates a service access request by using a web browser on a client or a software client.

Steps 502-503: A service gateway with a PCEF function initiates service bandwidth requirement detection.

That is, it is determined in what kind of network bandwidth condition can a user have a relatively good experience when using a current service. A PCEF may use a method for dynamically detecting a service bandwidth requirement to detect a current service bandwidth requirement.

Dynamic detection of the service bandwidth requirement indicates that when the user accesses a multimedia service, a PCEF entity may determine a bandwidth requirement of the service according to media description information (if carried in signaling) in service source interaction signaling because a service request needs to be transferred through the PCEF. If description in the SDP (Session Description Protocol, session description protocol) is b=AS:2000, it indicates that the service session requires a bit rate of 2 M bandwidth and therefore the current service bandwidth requirement is detected.

In step 503, the PCEF reports the service access request of the user to a billing system, where a reported message may carry an ID of a service currently accessed, and subsequently the billing system performs authentication and charging according to the ID; in addition, the reported message optionally carries required bandwidth of a service source, where a required bandwidth value may be carried in a public AVP (Attribute Value Pair, attribute value pair), such as a Service-Information field, or may be carried in a Vendor AVP.

The user may run two or more services that need to occupy network bandwidth at the same time and therefore the service gateway may obtain bandwidth requirements of multiple running services that occupy the network bandwidth.

Steps 504-505: Determine a service right. The steps are optional. The billing system may first perform authentication on service access of the user and determine whether the user has a right to use the service. If the user has no right, the service access request of the user is directly rejected to end the service access. If the user has the access right, interaction and access of the service is proper.

Step 506: Determine whether the bandwidth is sufficient. Determining whether the bandwidth is sufficient is to compare currently available bandwidth of the user with a bandwidth requirement of a service source currently used. When the currently available bandwidth of the user is smaller than the bandwidth requirement of the service source, it may be considered that QoE of the user is relatively poor. For a specific manner for determining whether the bandwidth is sufficient, reference may be made to the method and description in step 102 in the above embodiment. Therefore, details are not repeated in this embodiment.

For the currently available bandwidth of the user, a convergent billing system may use a static acquiring method. That is, a package subscribed to by the user is queried to determine maximum bandwidth currently valid for the user. For example, a monthly package subscribed to by the user is 30 Yuan with a 200 M traffic package and 1 M bandwidth and then it is considered that currently maximum possible bandwidth of the user is 1 M. Certainly, current bandwidth of the user may be dynamically detected in real time, which may specifically include: by using software deployed on a user end, when the current bandwidth of the user needs to be detected, sending a detection command to the user end software to require the user client software to report information about the current bandwidth condition of the user; alternatively, reporting, by the client software, the bandwidth condition periodically; or triggering the client software for reporting when a condition is met (for example, the bandwidth is lowered to a certain threshold).

For a bandwidth requirement of a service source, the convergent billing system may preferentially use data reported by the PCEF in step 503. If the PCEF cannot acquire the data or does not report the data due to other reasons, the convergent billing system may locally acquire the data.

A method for the convergent billing system to locally acquire the bandwidth requirement of the service source may be reading, according to a service ID reported by the PCEF, static data of a bandwidth requirement of a corresponding service configured in a system. For example, a type of a service accessed by the user is reported by the PCEF as a Youku video service according to the service ID, and in this case, the billing system reads configuration information about a local Youku video service to acquire a bandwidth requirement of the service.

If the PCEF does not report the bandwidth requirement of the service source and the billing system is not locally configured with the bandwidth requirement of the current service (for example, when the user accesses an obscure video website), the current solution cannot determine the current QoE of the user. In this case, the system may regard the QoE of the user as meeting a user requirement by default, that is, the current bandwidth of the user is sufficient to meet a service requirement, and does not send reminding to the user.

Step 507: Trigger a real-time notification. If the billing system determines that the current bandwidth condition of the user is relatively poor, a bandwidth insufficiency notification may be sent to the ODP server, where the notification message may include a notification type (such as a "The QoE is insufficient" message), a target user (such as a user currently using a service), and information about a suggested product that meets the bandwidth requirement of the service source, that is, recommendation of a higher bandwidth product, such as a product ID list.

Step 508: Determine a reminding manner. The ODP Server may select an appropriate reminding manner according to a user status, where the reminding manner includes but is not limited to an SMS, an MMS, an email, real-time reminding of an ODP client, and the like.

Step 509: Push a reminding message. The ODP Server organizes and sends, according to content of the bandwidth insufficiency notification sent by the billing system, a reminding message to a user client to remind the user that available bandwidth is insufficient, where the reminding message may include recommendation information about a bandwidth product, a product upgrade information, or a product trial information, and is sent to the user.

The "bandwidth product recommendation" message sent by the ODP server to the user may include a message type (bandwidth product recommendation), a list of products that are recommended for subscription and meet the bandwidth requirement of the service source, and description of each product. The description of each product may be abstracted from a locally stored product description information base according to a product ID received from the billing system.

Further, sending of the reminding message may be delayed. A purpose for delaying sending is that the user can actually feel whether current service experience is acceptable in a period of time. A time interval for delaying the bandwidth insufficiency reminding may be configured on the ODP server.

If the reminding manner is real-time reminding of the ODP client, a reminding dialog box is displayed to remind the user in real time on a mobile phone client of the user. The user clicks to view the real-time reminding on a terminal (ODP Client), where reminding content may include: a recommended product, a trial package and detailed description, a trial validity period (controlled by a combination of parameters such as a period, accumulated traffic, and access times), a tariff in the trial period (specified by a carrier and may be set to free).

Step 510: The user performs self-selection. The message sent by the ODP server carries product recommendation information, trial information, and a corresponding triggering manner and therefore the user may directly select a recommended or trial product. If the user agrees with a trial first, the user may directly click "trial" on the ODP message for a bandwidth product trial.

Steps 511-512: The terminal (ODP Client) initiates a product trial request; and the ODP Server forwards the request to the convergent billing system.

Certainly, the terminal may also directly initiate a product subscription or upgrade request. In this case, other network elements do not need to execute restriction of the trial period but may directly change the user bandwidth in a subsequent step.

Step 513: The billing system performs processing of the product subscription; and the billing system performs a trial product subscription operation and records a subscription relationship between the user and the trial product.

Steps 514-516: The product trial is successful and QoS of the user is adjusted. The billing system notifies a PCRF of a change of a user subscription relationship and updates and delivers a QoS policy; and the PCRF generates a new QoS policy according to a new product subscription relationship of the user in combination with information such as a service using condition.

In this embodiment, if the user tries a high bandwidth package, the PCRF generates a bandwidth increasing policy and delivers several parameters that need to be monitored, including accumulated access duration, accumulated traffic, accumulated access times, and the like

Step 517: The PCRF delivers the new QoS policy to the service gateway PCEF; and the PCEF performs local policy updating to increase bandwidth of the user.

Steps 518-519: A process for presenting a trial subscription result is as follows: The billing system returns a subscription result to the ODP Server; the ODP Server pushes a trial result to the terminal (ODP Client); the ODP Client presents the result to the user; and the user continues service access. During a service access process, the service gateway PCEF interacts with the convergent billing system to complete a service charging flow (it is free in this embodiment) and reports access duration of the user each time, access traffic, access times, and the like, and the billing system performs accumulation measurement.

Steps 520-522: Adjust the QoS in real time after the trial product is invalid. Because the billing system records a using condition of a package product of the user (accumulated access duration, accumulated traffic, accumulated access times, and the like), when a high bandwidth trial product subscribed to by the user is invalid (controlled by a combination of parameters such as product validity period, duration, traffic, and access times), the billing system updates the user subscription relationship; the billing system triggers updating of the QoS policy, restores the user bandwidth in real time (a network element interaction process is consistent with that in a product trial flow), and pushes trial expiration reminding to the user, where reminding content includes recommendation of a formal product (the network element interaction process is similar to a trial success notification).

Functions, such as bandwidth notification, QoE detection, bandwidth adjustment reminding, a bandwidth product upgrade, subscription, or trial, and flexible charging may be implemented by using the method in this embodiment of the present invention. This improves bandwidth perception of the user, enables a user to adjust bandwidth in a more convenient and flexible way, and improves user experience.

It should be noted that, for brevity, the foregoing method embodiments are represented as a series of actions. However, persons skilled in the art should understand that the present invention is not limited to the order of the described actions, because according to the present invention, some steps may adopt other orders or occur simultaneously. It should be further understood by persons skilled in the art that the described embodiments in the specification all belong to exemplary embodiments, and the involved actions and modules are not necessarily required by the present invention.

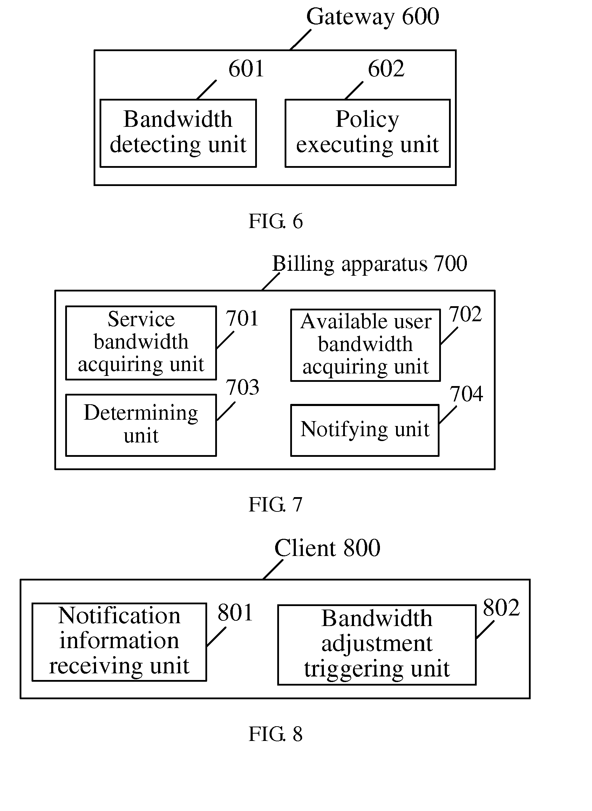

FIG. 6 is a schematic diagram of a gateway 600 that is configured to execute corresponding method steps in the above embodiments according to an embodiment of the present invention. The gateway includes a bandwidth detecting unit 601 and a policy executing unit 602.

The bandwidth detecting unit 601 is configured to detect a user service bandwidth requirement according to a service access request and report the service bandwidth requirement to a bandwidth determining network element.

The bandwidth detecting unit 601 may determine the service bandwidth requirement according to media description information in service source interaction signaling.

The bandwidth determining network element may specifically be a billing system or may also be other network elements.

The policy executing unit 602 is configured to increase user bandwidth when the bandwidth determining network element determines that bandwidth is insufficient according to obtained available bandwidth of the user and the service bandwidth requirement reported by the bandwidth detecting unit 601.

FIG. 7 is a schematic diagram of a billing apparatus 700 that is configured to execute corresponding method steps in the above embodiments according to an embodiment of the present invention. The billing apparatus includes:
a service bandwidth requirement acquiring unit 701, configured to receive a service bandwidth requirement sent by a gateway;
an available user bandwidth acquiring unit 702, configured to acquire available bandwidth of a user; where
specifically, the available user bandwidth acquiring unit 702 may acquire currently valid maximum bandwidth of the user by querying a package subscribed to by the user; or, the available user bandwidth acquiring unit 702 may send a detection command to user end software to require the user client software to report information about a current bandwidth condition of the user; or the client software periodically reports a bandwidth condition; and when a condition is met (for example, the bandwidth is lowered to a certain threshold), the client software is triggered for reporting and the available user bandwidth acquiring 702 acquires information about the available bandwidth of the user, where the information is reported by the client software;
a determining unit 703, configured to compare the available bandwidth of the user with bandwidth requirement of a service currently used by the user to determine whether the available bandwidth of the user is insufficient, where the manner for the determining unit 703 to determine whether the available bandwidth of the user is sufficient is similar to the method in step 102 and for details and an implementation manner, reference may be made to related description in step 102; and
a notifying unit 704, configured to notify the user of an available bandwidth condition according to a determining result of the determining unit, where
the notifying unit 704 may further carry information that requires the user to determine the QoE in notification information for notifying the user of the available bandwidth condition, so that the user confirms and feeds back a QoE condition according to the information; and
the notifying unit 704 may further include bandwidth product recommendation information and product trial information or upgrade information in the notification information and may further include a triggering manner that may enable the user to directly trigger a bandwidth upgrade, a bandwidth subscription, or a bandwidth trial in the notification information.

FIG. 8 is a schematic diagram of a user client 800 that is configured to execute corresponding steps of methods in the above embodiments, where the client 800 may be in various forms, such as a mobile terminal or a PC terminal. The user client 800 includes:
a notification information receiving unit 801, configured to receive bandwidth condition notification information delivered after a network side compares available bandwidth of a user with a bandwidth requirement of a service currently used by the user, where the bandwidth condition notification information includes a triggering manner for the user to trigger a bandwidth upgrade, a bandwidth subscription, or a bandwidth trial, and the bandwidth condition notification information includes bandwidth product recommendation information and product trial or upgrade information; and
a bandwidth adjustment triggering unit 802, configured to send a bandwidth adjustment request to the network side according to the bandwidth adjustment triggering manner carried in the bandwidth condition notification information, and trigger, by using the bandwidth adjustment request, the network side to adjust a bandwidth product of the user, where the adjustment includes a bandwidth upgrade and a bandwidth product subscription or trial.

By using the gateway, the billing system, and the user client in this embodiment of the present invention, a network side is capable of promptly perceiving bandwidth using experience of a user when the user is actually using various services, and giving a prompt to the user, so that the user may understand a current network bandwidth condition and explicitly understand a comparison relationship between a current network bandwidth product condition and a currently used service. Further, bandwidth product recommendation information and/or a triggering manner for the user to directly trigger an upgrade or a trial of a product is carried in bandwidth condition notification information sent to the user, so that the user is capable of performing a trial or an upgrade on a bandwidth product in a more convenient way, thereby improving user experience.

Content, such as information interaction and execution processes between the modules in the apparatus and the system, is based on a same idea as that in the method embodiments of the present invention. Therefore, for detailed content, reference may be made to description in the method embodiments of the present invention. Details are not repeated herein.

Persons of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (ROM: Read-Only Memory), or a random access memory (RAM: Random Access Memory).

In this specification, specific examples are used for illustrating principles and implementation manners of the present invention. The foregoing description about the embodiments is merely used to help understand the methods and core ideas of the present invention. Meanwhile, persons of ordinary skill in the art may make modifications to the specific implementation manners and application scopes according to the idea of the present invention. In conclusion, the content of this specification should not be construed as a limitation to the present invention.

## Claims

1. A user bandwidth notification method, comprising:
detecting, by a network side, available bandwidth of a user and a bandwidth requirement of a service currently used by the user;
comparing, by the network side, the available bandwidth of the user and the bandwidth requirement of the service currently used by the user; and
notifying, by the network side, the user of a bandwidth condition according to a comparison result.

2. The method according to claim 1, wherein the detecting, by a network side, available bandwidth of a user specifically comprises:
querying, by a billing system, a package subscribed to by the user and acquiring the available bandwidth of the user according to the package subscribed to by the user.

3. The method according to claim 1 or 2, wherein the detecting, by a network side, a bandwidth requirement of a service currently used by the user specifically comprises:
detecting and obtaining, by a service gateway according to media description information in service interaction signaling, the bandwidth requirement of the service currently used by the user.

4. The method according to claim 1 or 2, wherein the detecting, by a network side, a bandwidth requirement of a service currently used by the user specifically comprises:
checking, by the billing system, registration information about the service currently used by the user to obtain the bandwidth requirement of the service currently used by the user.

5. The method according to any one of claims 1-4, wherein the notifying the user of an available bandwidth condition according to a comparison result specifically comprises: if the comparison result is that the available bandwidth of the user is smaller than the bandwidth requirement of the service currently used by the user, notifying the user that the available bandwidth is insufficient.

6. The method according to claims 1-5, wherein at least one of recommendation information, trial information, or upgrade information about a bandwidth product of the user is further comprised in notification information when the user is notified of the bandwidth condition.

7. The method according to claim 6, wherein the network side selects, according to a user attribute, a corresponding bandwidth product comprised in the notification information.

8. The method according to claim 6 or 7, wherein the notification information comprises a triggering manner for the user to directly trigger a bandwidth upgrade, a bandwidth subscription, or a bandwidth trial.

9. The method according to any one of claims 1-8, wherein the available bandwidth of the user is specifically available bandwidth of a current service, a fixed ratio value of a total user bandwidth, or bandwidth allocated for the current service.

10. A method for detecting quality of experience QoE of a user, comprising:
detecting, by a network side, available bandwidth of a user and a bandwidth requirement of a service currently used by the user;
comparing, by the network side, the available bandwidth of the user and the bandwidth requirement of the service currently used by the user; and
determining, by the network side, QoE of the user according to a comparison result.

11. The method according to claim 10, wherein after determining the QoE of the user, the network side notifies the user of a QoE condition, collects feedback information about the QoE from the user, and updates, according to the feedback information, the QoE of the user.

12. The method according to claim 11, wherein the network side further comprises at least one of recommendation information, trial information, or upgrade information about an available bandwidth product of the user in notification information when notifying the user of the QoE condition and collecting the feedback information about the QoE from the user.

13. The method according to claim 12, wherein the notification information comprises a triggering manner for the user to directly trigger a bandwidth upgrade, a bandwidth subscription, or a bandwidth trial.

14. A gateway, comprising a bandwidth detecting unit and a policy executing unit, wherein
the bandwidth detecting unit is configured to detect a service bandwidth requirement of a user and report the service bandwidth requirement to a bandwidth determining network element; and
the policy executing unit is configured to increase user bandwidth when the bandwidth determining network element determines that bandwidth is insufficient according to obtained available bandwidth of the user and the service bandwidth requirement reported by the bandwidth detecting unit.

15. The gateway according to claim 14, wherein the bandwidth detecting unit is specifically configured to detect and obtain a service bandwidth requirement according to media description information in service source interaction signaling.

16. A billing apparatus, comprising a service bandwidth requirement acquiring unit, an available user bandwidth acquiring unit, a determining unit, and a notifying unit, wherein
the service bandwidth requirement acquiring unit is configured to receive a service bandwidth requirement sent by a gateway;
the available user bandwidth acquiring unit is configured to acquire available bandwidth of a user;
the determining unit is configured to compare the available bandwidth of the user with the service bandwidth requirement to determine whether the available bandwidth of the user is sufficient; and
the notifying unit is configured to notify the user of an available bandwidth condition according to a determining result of the determining unit.

17. The billing apparatus according to claim 16, wherein the notifying unit is further configured to comprise a triggering manner that may enable the user to directly trigger a bandwidth upgrade, a bandwidth subscription, or a bandwidth trial in a notification message for notifying the user of the available bandwidth condition.

18. A client, comprising a notification information receiving unit and a bandwidth adjustment triggering unit, wherein
the notification information receiving unit is configured to receive bandwidth condition notification information delivered after a network side compares available bandwidth of a user with a bandwidth requirement of a service currently used by the user, wherein the bandwidth condition notification information comprises a triggering manner for the user to trigger a bandwidth upgrade, a bandwidth subscription, or a bandwidth trial; and
the bandwidth adjustment triggering unit is configured to send a bandwidth adjustment request to the network side according to the bandwidth adjustment triggering manner carried in the bandwidth condition notification information, and trigger, by using the bandwidth adjustment request, the network side to adjust a bandwidth product of the user, wherein the adjustment comprises at least one of a bandwidth upgrade and a bandwidth product subscription or trial.
